# EUROPÄISCHE PATENTSCHRIFT

(11) **EP 4 103 349 B1**
(45) Veröffentlichungstag und Bekanntmachung des Hinweises auf die Patenterteilung: **27.09.2023**
(21) Anmeldenummer: 21710387.8
(22) Anmeldetag: 03.02.2021
(51) Int. Cl.: B23K 26/16, B23K 26/38

(54) **LASERPLOTTER UND VERFAHREN ZUM BETREIBEN EINES LASERPLOTTERS**
LASER PLOTTER AND METHOD FOR OPERATING A LASER PLOTTER
TRACEUR LASER ET PROCÉDÉ POUR FAIRE FONCTIONNER UN TRACEUR LASER

(30) Priorität: 12.02.2020 AT 501022020
(43) Veröffentlichungstag der Anmeldung: 21.12.2022
(73) Patentinhaber: Trotec Laser GmbH, 4614 Marchtrenk (AT)
(72) Erfinder: WÖGERBAUER, Ronald, 4600 Thalheim bei Weis (AT)
(86) Internationale Anmeldenummer: PCT/AT2021/060039
(87) Internationale Veröffentlichungsnummer: WO 2021/159158

(56) Entgegenhaltungen:
- EP-A1- 2 452 774
- EP-A1- 3 228 417
- US-A1- 2009 223 944
- US-A1- 2012 193 333
- US-A1- 2019 375 052

## Beschreibung

Die Erfindung betrifft einen Flachbett-Laserplotter zum Abarbeiten eines Jobs für das Schneiden, Gravieren, Markieren und/oder Beschriften eines vorzugsweise flachen Werkstückes, der zumindest ein Gehäuse mit einem Bearbeitungsraum zum Positionieren eines Werkstückes ausgebildet ist, wobei dieser zumindest eine Strahlenquellen in Form eines Lasers und einer Steuereinheit zum Steuern des über vorzugsweise einen Riemenantrieb betriebenen Schlitten mit daran verfahrbar angeordneten Fokussiereinheit aufweist. Sie betrifft außerdem ein Verfahren zum Betreiben eines Flachbett-Laserplotters.

Aus dem Stand der Technik sind Flachbettlasersysteme bekannt, die über einen mit Riemenantrieb betriebenen Schlitten, an dem eine Fokussiereinheit ebenfalls verstellbar ist, ausstattet sind. Vorzugsweise werden dabei flächige Werkstücke, wie Papier, Platten, Textilien, usw. über einen Laser, insbesondere Laserstrahl, bearbeitet. Damit die bei der Bearbeitung entstehende Abgase bzw. Dämpfe abzusaugen, sind am Schlitten Absaugvorrichtungen angeordnet. Dabei wird ein Absaugschlauch im Bereich der Fokussiereinheit angeordnet.

Nachteilig ist hierbei, dass beim Einsatz eines Absaugschlauches an der Fokussiereinheit, dass damit die Beweglichkeit, insbesondere die Verfahrgeschwindigkeit der Fokussiereinheit mit dem befestigten Absaugschlauch, eingeschränkt wird.

Nachteilig ist weiters, dass bei einer Absaugung direkt am Bearbeitungskopf der Absaugkanal sowie der Bearbeitungskopf stark verschmutzt werden. Weiters kann es vorkommen, dass bei direkter Anordnung des Absaugschlauches an der Fokussiereinheit die Gase und Partikel mit hohen Temperaturen direkt in den Absaugschlauch gelangen können, sodass eine erhöhte Brandgefahr entsteht.

Die US 2009223944 A1 zeigt eine Laserbearbeitungsmaschine, insbesondere einen Laserplotter, der zumindest ein Gehäuse mit einem Bearbeitungsraum zum Positionieren eines Werkstückes aufweist, wobei dieser eine Strahlenquelle in Form eines Lasers und eine Steuereinheit zum Steuern des Schlittens mit daran verfahrbar angeordneten Fokussiereinheit aufweist. Weiters ist eine Absaugbalken im Bearbeitungsraum angeordnet, wobei die beiden Enden des Absaugbalkens außerhalb oder am Rand des Bearbeitungsraums zu einer Vakuumpumpe geführt sind. Der Absaugbalken weist dabei einen länglichen Absaugschlitz auf, der parallel zum Bearbeitungstisch ausgerichtet sind und somit eine Absaugstrom vom vorderen Bereich des Bearbeitungsraums zum Absaugbalken erzeugt.

Nachteilig bei einer derartigen Lösung ist, dass einerseits durch diese Ausbildung unterschiedlich starke Absaugströme erzeugt werden, da im Randbereich, der mit der Vakuumpumpe verbunden ist, eine höhere Absaugleistung vorhanden ist als dies im Zentrum des Absaugbalkens.

Die US 2019375052 A1 zeigt ein Laserbearbeitungsgerät, bei dem an beiden Seiten des Bearbeitungsraumes Ein- und Auslasskanäle angeordnet sind, die einen sogenannter Crossjet erzeugt wird, indem von einer Pumpe Frischluft angesaugt wird, die über einen Einlasskanal parallel zum Bearbeitungstisch mit hoher Geschwindigkeit einströmt und auf der gegenüberliegenden Seite vom Auslasskanal wieder abgesaugt wird. Dadurch kann einerseits der erzeugte Rauch und Spritzer nicht zur Optik des Lasers aufsteigen, wobei derartige Systeme nur in kleinen Arbeitsbereichen bzw. Flächen einsetzbar sind.

In der US 2012193333 A1 ist ein Laserplotter mit einem über einen Schlitten verstellbaren Fokussiereinheit gezeigt, bei dem der Bearbeitungsraum durch ein Gehäuse mit einem Deckel umschlossen ist. Hierbei wird ein Absaugbalken an der Rückseite des Bearbeitungsraum eingebaut, der sich nicht mit dem Schlitten mitbewegt. Damit hier möglichst wenig Fremdluft bzw. Frischluft angesaugt wird, ist der Schlitten mit einem Abdeckelement verbunden, wobei das Abdeckelement mit der Rückseite des Gehäuses befestigt ist. Wird nunmehr der Schlitten im Bearbeitungsraum verfahren, so wird das Abdeckelement horizontal mitbewegt, sodass einen Kanal zwischen dem Bearbeitungstisch und dem Abdeckelement gebildet wird. Dadurch wird das Absaugen von Fremd- bzw. Frischluft minimiert.

EP 3228417 A1 zeigt ein Laserbearbeitungsgerät, bei dem an einem Bearbeitungskopf eine Vorrichtung befestigt ist.

Weiters zeigt die EP 2452774 A4 eine Laserherstellungsanlagen zur Herstellung von Dünnfilm-Solarzellen mit einer Staub-Absauganlage dargestellt, wobei die Staub-Absauganlage auf den Bearbeitungsbereich aufgesetzt wird, sodass die einzelnen Düsen eine vertikale Absaugung durchführen.

Die Aufgabe der Erfindung liegt darin, einen Laserplotter und ein Verfahren zu schaffen, bei dem einerseits die obgenannten Nachteile vermieden werden und andererseits die Absaugleistung zu verbessern.

Die Aufgabe wird durch die Erfindung nach den unabhängigen Ansprüchen 1 und 4 gelöst.

Die Aufgabe der Erfindung wird durch einen Flachbett-Laserplotter gelöst, bei dem zwischen dem Schlitten und einer Bearbeitungsoberfläche des Bearbeitungsraums ein Absaugbalken zum Absaugen der bei der Bearbeitung des Werkstückes durch einen Laserstrahl entstehende Abgase bzw. Dämpfe angeordnet ist, wobei der Absaugbalken am Schlitten befestigt und L-förmig ausgebildet ist, wobei mehrere Absaugöffnungen des Absaugbalkens zum Erzeugen eines horizontalen Absaugstromes parallel zur Bearbeitungsoberfläche angeordnet bzw. ausgerichtet sind, wobei die Absaugöffnungen elektronisch steuerbar und mehrere Segmente unterteilt sind, wobei die Segmente nicht nur in Abhängigkeit von der Position der Fokussiereinheit aktivierbar sind, sondern dass die nicht in der Nähe befindlichen Segmente deaktivierbar sind.

Vorteilhaft ist hierbei, dass dadurch der senkrecht aufsteigende Rauch bzw. die Abgase über den horizontalen Abgasstrom eingesaugt werden und anschließend einfach an eine Absauganlage weitergefördert werden kann. Dabei kann aufgrund der Positionierung des Absaugbalkens dieser optimal unterhalb des Schlittens ausgerichtet werden, um die bestmögliche Absaugleistung zu erreichen.

Gleichzeitig wird bei entsprechend starken Absaugstrom ein Spritzschutz für die optischen Elemente der Fokussiereinheit bzw. des Laserkopfes, insbesondere der Linse, geschaffen werden, sodass die Fokussiereinheit bzw. der Laserkopf einfacher und kostengünstiger aufgebaut werden kann.

Ein horizontaler Absaugstrom hat weiters den Vorteil, dass der durch den Laserstrahl erzeugte Rauch bzw. die Abgase bereits beim Entstehen in Richtung des Absaugbalkens gelenkt werden, sodass der Bediener immer freie Sicht auf das Werkstück hat, was bei einer Absaugung von oben, wie aus dem Stand der Technik bekannt, nicht der Fall ist.

Dadurch wird auch erreicht, dass die Brandgefahr reduziert wird, da die heißen Abgase zuerst nach oben steigen und anschließend über den horizontalen Abgasstrom in den Abgaskanal gesaugt werden, wodurch eine entsprechende Abkühlung entsteht. Weiters ist der Abgaskanal vorzugsweise aus Metall gebildet, sodass ein Brand oder Schmelzen des Material, wie dies bei Abgasschläuchen möglich ist, ausgeschlossen ist. Ein weiterer Vorteil liegt in der Wartung, da ein derartiger Abgaskanal leichter gereinigt werden kann, da seitliche Wartungsöffnungen angeordnet sind.

Erfindungsgemäß ist der Absaugbalken L-förmig ausgebildet.

Dadurch wird ein einfacher und kostengünstiger Aufbau erzielt. Weiters können damit die Absaugöffnungen optimal nahe an die Entstehungsstelle der Abgase bzw. Rauches unterhalb des Schlittens positioniert werden. Vorteilhaft ist dabei auch, dass eine gleichmäßiger Absaugströmung über das gesamte Werkstück erzeugt werden kann, wodurch Wirbelbildungen vermieden werden. Hierzu ist es möglich, dass über Sensoren die Werkstückbreite ermittelt werden, sodass anschließend der Abgasstrom entsprechend ausgebildet wird, in dem die dazu notwendigen Abgasöffnungen aktiviert werden. Erfindungsgemäß sind die Absaugöffnungen in mehrere Segmente unterteilt, die je Position der Fokussiereinheit am Schlitten aktiviert sind. Dadurch wird erreicht, dass damit einerseits die Absaugleistung verringert werden kann, da der Abgasstrom nicht ständig über die gesamte Bearbeitungsbreite erzeugt werden muss, sondern nur in jenen Bereich aufgebaut wird, in dem sich die Fokussiereinheit bzw. der Laserkopf befindet.

Erfindungsgemäß ist der Absaugbalken am Schlitten befestigt. Dadurch wird dieser immer mit dem Schlitten mitbewegt, ohne hierzu entsprechende Vorkehrungen treffen zu müssen. Somit ist es egal, ob die Bearbeitung im vorderen oder hinteren Bereich des Bearbeitungsraums erfolgt. Weiters wird damit erreicht, dass die Absaugleistung über den gesamten Bearbeitungsraum ausgebildet sein kann.

Es ist aber auch eine Ausbildung von Vorteil, bei der die Absaugöffnungen durch mehrere Bohrungen oder mehrere Kanäle, insbesondere Längskanäle, oder elektronisch steuerbare Ventile, gebildet sind, die zum Erzeugen des parallel zur Bearbeitungstisch ausgerichteten Absaugstrom positioniert sind. Dadurch wird erreicht, dass je nach Einsatzgebiet bzw. der zu bearbeitenden Materialien unterschiedliche Absaugbalken mit unterschiedlichen Absaugöffnungen einsetzen kann. Hierbei ist es von Vorteil, wenn die Absaugbalken austauschbar am Schlitten befestigt ist.

Vorteilhaft ist auch eine Ausbildung, bei der an der Fokussiereinheit bzw. am Laserkopf zur Steuerung der Absaugströmung eine Absaugkappe angeordnet ist. Dadurch kann mit einfachen Mitteln auf die Absaugströmung Einfluss genommen werden. Insbesondere wird damit der Querschnitt zwischen der Unterkante der Absaugkappe und der Oberfläche des Werkstücks verringert, wodurch sich automatisch die Absauggeschwindigkeit in diesen Bereich erhöht.

Die Aufgabe der Erfindung wird aber auch durch ein Verfahren nach Anspruch 4 gelöst, bei dem eir horizontaler Absaugstrom von einem am Schlitten befestigten und L-förmig ausgebildeten und elektrisch steuerbare Absaugöffnungen aufweisenden Absaugbalken zwischen dem Schlitten, insbesondere der Fokussiereinheit bzw. Laserkopf und einem Bearbeitungstisch erzeugt wird, wobei die Absaugöffnungen in mehrere Segmente aufgeteilt sind, wobei die Segmente nicht nur in Abhängigkeit von der Position der Fokussiereinheit aktiviert werden, sondern dass die nicht in der Nähe befindlichen Segmente deaktiviert werden. Vorteilhaft ist hierbei, dass einerseits eine optimale Positionierung der Absaugung unterhalb des Schlittens möglich ist und andererseits gleichzeitig ein Spritzschutz für die optischen Elemente am Fokussiereinheit bzw. des Laserkopfes durch den horizontalen Abgasstrom geschaffen wird. Weiters wird dadurch erreicht, dass nur in jenen Bereich ein Abgasstrom erzeugt wird, wo auch Rauchgase bzw. Abgase, entstehen, sodass eine optimale Anpassung und Sicherheit gewährleistet ist. Weiters wird damit erreicht, dass die Erzielung einer höchstmöglichen Absaugleistung, auch im Bereich unmittelbar nach der Bearbeitung erzielt wird. In diesem Bereich können in Abhängigkeit von Material und Bearbeitungsprozess auch nach der unmittelbaren Bearbeitung Gase entstehen.

Schließlich sind die Maßnahmen von Vorteil, bei der zur Steuerung einer Absaugströmung eine Absaugkappe am Laserkopf bzw. der Fokussiereinheit befestigt wird. Damit kann durch Tausch der Absaugkappe auf die unterschiedlichsten Gegebenheiten für die Abgasströmung rücksichtig genommen werden, ohne dass dadurch der Absaugbalken verändert werden muss. Somit kann eine schnelle und einfache Anpassung des Absaugstromes über die Absaugkappe vorgenommen werden. Speziell bei Materialien mit hoher Rauchentwicklung kann damit eine Abgaskappe eingesetzt werden, die einerseits eine Art Absperrung ausbildet und andererseits die Absaugströmung erhöht.

Die Erfindung wird anschließend in Form eines Ausführungsbeispiels beschrieben, wobei darauf hingewiesen wird, dass die Erfindung nicht auf das dargestellten und beschriebenen Ausführungsbeispiel bzw. Lösung begrenzt ist.

### Es zeigen:

- Fig.1: eine schaubildliche Darstellung eines Laserplotters zur Bearbeitung eines Werkstückes mit horizontal ausgerichteter Absaugvorrichtung, in vereinfachter, schematischer Darstellung;
- Fig. 2: eine schaubildliche Detaildarstellung des Bereiches des Schlittens mit der Absaugvorrichtung, in vereinfachter, schematischer Darstellung;
- Fig. 3: ein Detailausschnitt im Bereich der Fokussiereinheit mit geschnittenen L-förmiger Absaugbalken, in vereinfachter, schematischer Darstellung.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen. Auch können Einzelmerkmale oder Merkmalskombinationen aus den gezeigten und beschriebenen Ausführungsbeispielen für sich eigenständige erfinderische Lösungen darstellen.

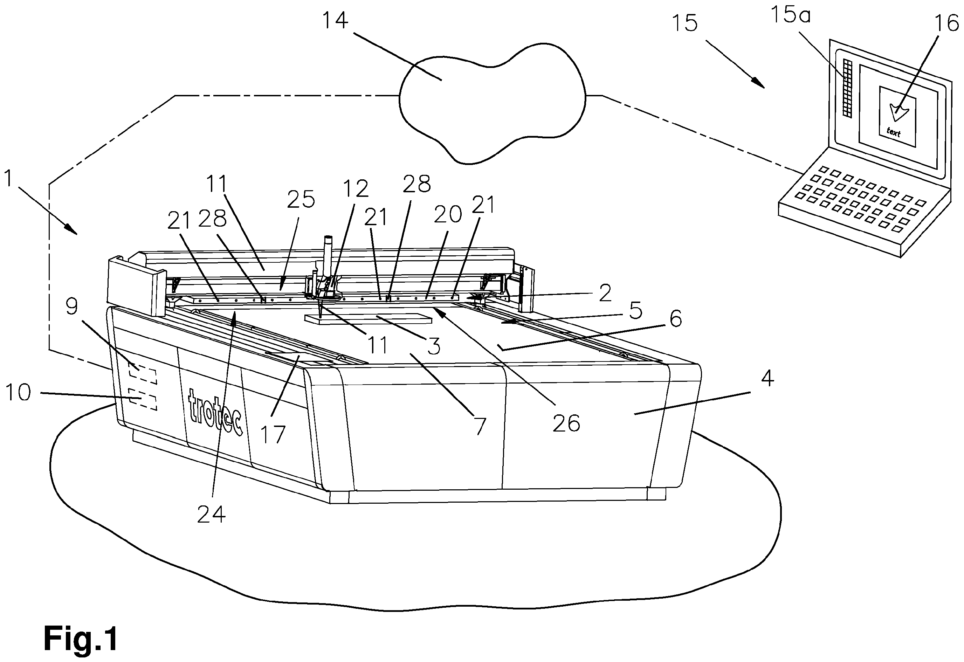

In den Figuren 1 bis 3 ist ein Laserplotter 1 mit einer Absaugvorrichtung 2 zum Bearbeiten von Werkstücken 3 gezeigt, wobei der Laserplotter 1 zum Abarbeiten eines Jobs für das Schneiden, Gravieren, Markieren und/oder Beschriften des vorzugsweise flachen Werkstückes 3 ausgebildet ist.

Der Laserplotter 1 weist ein Gehäuse 4 auf, in dem sämtliche Elemente, wie beispielsweise Antriebe, Elektronik, Laserquelle, usw. integriert sind, sodass der Laserplotter 1 als Stand-Alone Gerät betrieben werden kann. Dabei weist der Laserplotter 1 zumindest einem Bearbeitungsraum 5 zum Positionieren des Werkstückes 3 auf eine Bearbeitungsoberfläche 6 eines Bearbeitungstisches 7 auf. Weiters weist der Laserplotter 1 zumindest eine Strahlenquellen in Form eines Lasers 9 und einer Steuereinheit 10 zum Steuern des über vorzugsweise einen Riemenantrieb betriebenen Schlitten 11 mit daran verfahrbar angeordneten Fokussiereinheit 12 auf.

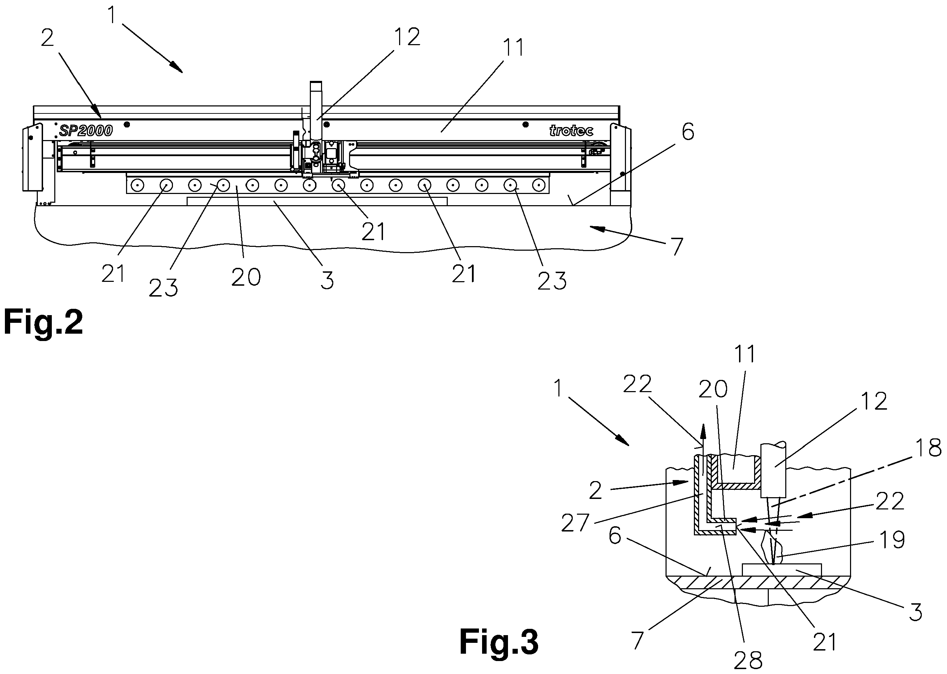

Der Vollständigkeit halber wird darauf hingewiesen, dass der Laserplotter 1 über Anschlüsse bzw. Leitungen zur Energieversorgung oder zur Anbindung ans Intranet und/oder Internet 14, wie schematisch dargestellt, ausgestattet ist bzw. sein kann. Dabei ist es möglich, dass über Schnittstellen oder Leitung die Verbindung mit externen Komponenten 15, wie einem Laptop bzw. Computer 15a, einer automatischen Zuführeinheit, ein Förderband, ein Entnahmeroboter usw. direkt oder über das Intranet und/oder Internet 14, insbesondere einer Cloud, bzw. per WLan oder Bluetooth verbunden sein kann, sodass Daten zum Bearbeiten des Werkstückes 3 von der externen Komponenten 15, insbesondere dem Laptop 15a, übertragen werden können. Bei der Ausführung des Stand-Alone Gerätes nach Fig. 1 erfolgt ein manuelles Einlegen und Entnehmen des Werkstückes 3 von einem Bediener auf dem Bearbeitungstisch 7 in dem Bearbeitungsraum 8, wobei anschließend ein Bearbeitungsjob 16, wie er beispielsweise am Computer 15a erstellt wurde, über eine Bedieneinheit 17 am Laserplotter 1 gestartet wird. Auf die detaillierte Beschreibung der Funktion des Laserplotters 1, sowie das Bearbeiten des Werkstückes 3 wird verzichtet, da hierzu derartige Laserplotter 1 bereits aus dem Stand der Technik bekannt sind. Es wird lediglich darauf hingewiesen, dass es sich um einen Laserplotter 1 zum Abarbeiten von sogenannten Jobs 16 für das Schneiden, Gravieren, Markieren und/oder Beschriften eines vorzugsweise flachen Rohlings 3, insbesondere Werkstück 3, handelt. Dabei wird der Laserplotter 1 für Werkstückdicken von bis zu 50 mm eingesetzt. Als Werkstücke 4 bzw. Rohlinge 7 werden vorzugsweise Papier, Platten, Textilien verarbeitet. Wesentlich bei derartigen Laserplottern 1 ist, dass diese einen Bearbeitungsraum 8 aufweisen, in dem vorzugsweise ein mit einem Riemenantrieb betriebener Schlitten 11 mit daran verfahrbarer Fokussiereinheit 12 bzw. Laserkopf bewegt bzw. verfahren wird. Hierzu wird von der Strahlenquelle 9, insbesondere Laser 9, wie schematisch dargestellt, ein Laserstrahl 18 über Umlenkelemente (nicht dargestellt) an die Fokussiereinheit 12 gelenkt, von der der Laserstrahl 18 in Richtung Werkstück 3 abgelenkt und fokussiert wird, sodass der Rohling 3 bzw. Werkstück 3 entsprechend dem in eine Steuerung 10 geladenen Job 16 bearbeitet wird. Da bei der Bearbeitung der unterschiedlichen Materialen durch den Laserstrahl 18 bei der Verdampfung von Material Abgase bzw. Dämpfe, insbesondere Rauch19, wie schematisch in Fig. 3 dargestellt, entstehen, ist es notwendig, dass Laserplotter 1 eine Absaugvorrichtung 2 auf, die im Bereich der Fokussierungseinheit 12 angeordnet ist und somit ev. entstehende Dämpfe 19 bzw. Rauch 19 direkt absaugt werden, sodass keine unangenehmen oder gefährliche Gerüche vom Bediener eingeatmet werden kann.

Erfindungsgemäß ist nunmehr vorgesehen, dass zwischen dem Schlitten 11 und der Bearbeitungsoberfläche 6 des Bearbeitungsraums 8 ein Absaugbalken 20 zum Absaugen der bei der Bearbeitung des Werkstückes 4 durch den Laserstrahl 18 entstehende Abgase bzw. Dämpfe 19 angeordnet ist, wobei eine oder mehrere Absaugöffnungen 21 des Absaugbalkens 20 zum Erzeugen eines horizontalen Absaugstromes 22 (wie mit Pfeilen dargestellt) parallel zur Bearbeitungsoberfläche 6 bzw. zum Bearbeitungstisch 7 angeordnet bzw. ausgerichtet ist bzw. sind.

Vorzugsweise ist dabei der Absaugbalken 20 L-förmig ausgebildet, wie dies in Fig. 3 ersichtlich ist, wobei dieser am Schlitten 11, insbesondere auf der Gegenüberliegenden Seite zur Fokussiereinheit 12 bzw. des Laserkopfes 12 befestigt wird. Dadurch wird erreicht, dass der Erzeugte Abgasstrom 22 unterhalb des Schlittens 11 erzeugt wird und anschließend auf der Rückseite des Schlittens 11, also auf der gegenüberliegenden Seite zur Fokussiereinheit 12 bzw. dem Laserkopf 12, derart umgelenkt wird, dass dieser in Richtung Schlitten 11, also nach oben, umgelenkt wird, wo der Absaugstrom 22 von einer Absauganlage (nicht dargestellt) abgeführt werden wird. Selbstverständlich ist es auch möglich, dass der Absaugbalken 20 mehrteilig, insbesondere L-förmig, aufgebaut sein kann.

Dabei ist beim erfindungsgemäßen Absaugvorrichtung wesentlich, dass ein parallel, also horizontal, zum Bearbeitungstisch 7 bzw. der Bearbeitungsoberfläche 6 erzeugter Abgasstrom 19 geschaffen bzw. erzeugt wird, sodass der senkrecht aufsteigende Rauch 19 bzw. die Abgase 19 durch den Abgasstrom 19 in den Abgasbalken 20 gesaugt und abtransportiert wird, wodurch im Umfeld der Fokussiereinheit 12 bzw. des Laserkopfes 12 keinerlei gefährliche Abgase 19 von einem Bediener eingeatmet werden kann. Um einen optimalen horizontalen Absaugstrom 19 zu erzeugen, können die Absaugöffnungen 21 unterschiedlichste ausgebildet werden. Dabei ist es möglich, dass einerseits reine manuelle Öffnungen, insbesondere eine oder mehrere Bohrungen, wie in Fig. 1 gezeigt, oder ein oder mehrere Kanäle, wie in Fig. 3 gezeigt, oder andererseits auch elektronisch steuerbare Öffnungen, wie ein elektronisch ansteuerbares Ventil 23, wie in Fig. 2 dargestellt, eingesetzt werden, wobei bei elektronisch ansteuerbare Ventile 23 diese mit die Steuerung 10 verbunden sind und entsprechend aktiviert werden, wobei vorzugsweise nicht immer alle Ventile 23 gleichzeitig aktiviert sind, sondere diese Positionsabhängig von der Fokussiereinheit 12 bzw. Laserkopf 12 aktiviert werden. Damit wird immer in jenen Bereich ein Abgasstrom 22 erzeugt, in dem gerade über den Laserstrahl 18 das Werkstück 3 bearbeitet wird und somit entsprechende Abgase 19 bzw. Rauch 19 entsteht.

Hierbei ist es vorteilhaft, dass die Absaugöffnungen 21 in einen oder mehrere Segmente unterteilt sind, die je Position der Fokussiereinheit 12 am Schlitten 11 aktiviert sind. Dabei kann der Absaugbalken 20 in zwei oder mehr Segmenten 24 bis 26 beispielsweise in drei Segmenten 24 bis 26, nämlich einen Linken-Segment 24, einen Mittel-Segment 25 und einen rechten Segment 26 gebildet, wozu der innere Abfuhrkanal 27 des Absaugbalkens 20 durch entsprechende Trennwände 28 unterteilt ist und die einzelnen Segmente unabhängig voneinander mit einer Absauganlage, insbesondere einem Absaugkompressor (nicht dargestellt) verbindbar ist. Somit kann je nach Position der Fokussiereinheit 12 bzw. des Laserkopfes 12 das nächst liegende bzw. überein stimmende Segment 24 bis 26 aktiviert werden. Dies hat den Vorteil, dass hierzu eine geringe Absaugleistung benötigt wird, da nicht immer der gesamte Absaugbalken 20 über die gesamte Bearbeitungsbreite des Laserplotters 1 einen Absaugstrom 22 erzeugen muss, sondern nur in jenen Bereich, wo sich gerade der Laserkopf 12 bzw. die Fokussiereinheit 12 befindet. Wechselt die Fokussiereinheit 12 bzw. Laserkopf von einem Segment, beispielsweise dem Mittleren-Segment 25 in einen anderen Bereich, beispielsweise in zum Linken-Segment 24, so wird das Linke-Segment 24 frühzeitig aktiviert, sodass ein reibungsloser Übergang gewährleistet ist.

Selbstverständlich ist es möglich, dass eine beliebige Anzahl an Segmenten 24 bis 26 eingesetzt werden. Ebenso erfolgt bei der Verwendung von elektronisch steuerbaren Absaugöffnungen 21, insbesondere Ventilen 23, die Steuerung, bei der beispielsweise eine voreinstellbare Anzahl an zu aktivierenden Ventilen 23 einstellbar ist, wodurch über eine bestimmte Breite der Abgasstrom 22 erzeugt wird. Wird dabei bei der Abarbeitung eines Bearbeitungsjobs 16 der Laserkopf 12 bzw. die Fokussiereinheit 12 nach rechts oder links verstellt, so werden von der Steuereinheit 10 immer die entsprechenden Ventile 23 aktiviert.

Weiters wird durch die spezielle Ausbildung des horizontalen Abgasstroms 22 erreicht, dass bei entsprechend hoher Abgasleistung gleichzeitig zum Absaugen der Rauchgase 19 bzw. Dämpfe 19 auch ein Spritzschutz für die Optik an der Fokussiereinheit 12 bzw. des Laserkopfes 12 erreicht, wodurch der Wartungszyklus für die Optik wesentlich verlängert wird, da kein Rauch 19 mehr an die Optik gelangt.

Erfindungsgemäß führt der Laserplotter 1 ein Verfahren zum Betreiben des Laserplotters 1 zum Bearbeiten vorzugsweiser flacher Werkstücke 3 für einen abzuarbeitenden Job 16 für das Schneiden, Gravieren, Markieren und/oder Beschriften eines Werkstückes 3 bzw. Rohlings 3 aus, bei dem in einem Gehäuse 4 des Laserplotters 1 zumindest eine Strahlquellen in Form eines Lasern 9 eingesetzt wird, der auf das zu bearbeitendes Werkstück 3 einwirkt, wobei das Werkstück 3 in dem Bearbeitungsraum 8 definiert abgelegt wird und ein von der Strahlquelle abgegebener Laserstrahl 18 über Umlenkelemente an eine Fokussiereinheit 12 bzw. dem Laserkopf 12 gesendet wird, von der der Laserstrahl 18 in Richtung Werkstück 3 abgelenkt und zur Bearbeitung fokussiert wird, wobei über eine Steuereinheit 10, insbesondere die Positionssteuerung zum Werkstückes 3 über eine in der Steuereinheit 10 laufende Software erfolgt, sodass das Werkstück 3 bevorzugt zeilenweise durch Verstellung des Schlittens 11 über vorzugsweise einem Riemenantrieb in X-Y-Richtung bearbeitet wird, und dass vorzugsweise an einer externen Komponente 15, insbesondere einem Computer 15a oder einem Steuergerät, eine Grafik und/oder ein Text über eine handelsübliche Software, wie beispielsweise Corel-Draw, Paint, usw., erstellt wird, welche an die Steuereinheit 10 des Laserplotters 1 übergeben wird und von der Steuereinheit 10 in Form eines oder mehrerer Jobs 16 abgearbeitet wird, wobei ein horizontaler Absaugstrom 22 von einem Absaugbalken 20 zwischen dem Schlitten 11, insbesondere der Fokussiereinheit 12 bzw. Laserkopf 12 und einem Bearbeitungstisch 7 erzeugt wird.

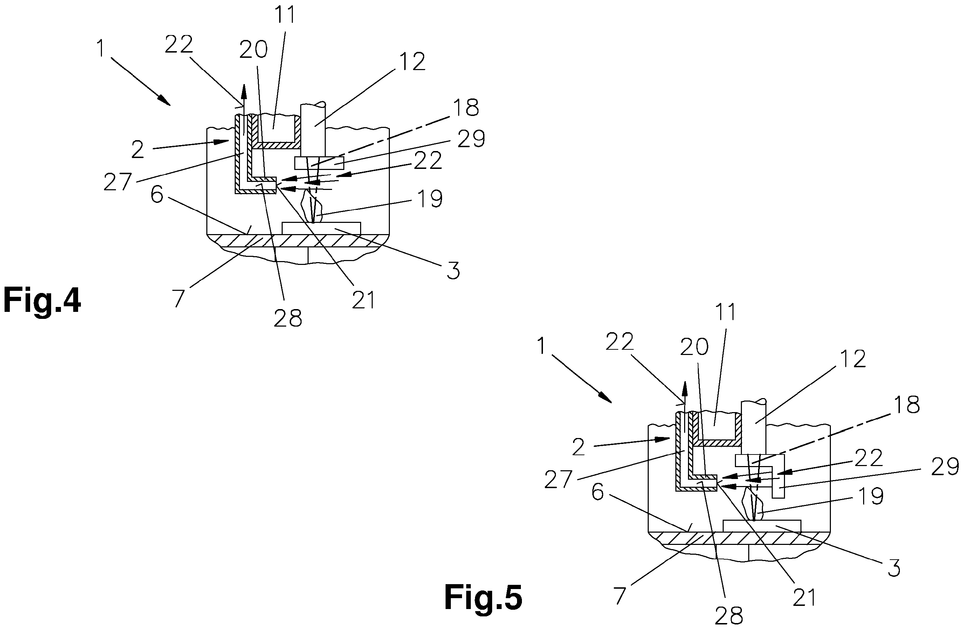

Weiters ist in den Figuren 4 und 5 eine Ausführungsvariante gezeigt, bei dem eine Absaugkappe 29 am Laserkopf 12 bzw. der Fokussiereinheit 12 angebracht ist, um die Absaugströmung 22 zu steuern. Gemäß Figur 4 wird durch den Einsatz der Absaugkappe der Querschnitt zwischen der Oberfläche des Werkstückes 3 und der Absaugkappe 29 verringert, wodurch eine höhere Strömungsgeschwindigkeit unterhalb der Absaugkappe 29 erzielt wird.

Weiters ist es auch möglich, dass die Absaugkappe 29 eine spezielle Form, wie beispielsweise in Figur 5 dargestellt, aufweisen kann, um noch eine bessere Absaugleistung im Bereich des Laserkopfes 12 bzw. der Fokussiereinheit 12 zu erzielen. Hierzu ist die Absaugkappe 29 beispielsweise L-förmig ausgebildet, wobei die Unterkante der Absaugkappe 29 mit der Unterkante des Absaugbalkens 20 endet, wodurch sichergestellt ist, dass der Schlitten 11 über das Werkstück 3 hinwegfahren kann. Durch die spezielle L-förmige Ausbildung der Absaugkappe 29 wird ebenfalls erreicht, dass der Absaugstrom 22 unterhalber der Fokussiereinheit 12 bzw. des Laserkopfes 12 verstärkt wird.

Der Ordnung halber sei abschließend darauf hingewiesen, dass zum besseren Verständnis des Aufbaus teilweise unmaßstäblich und/oder vergrößert und/oder verkleinert und vor allem nur schematisch dargestellt wurden.

## Patentansprüche

1. Flachbett-Laserplotter (1) zum Abarbeiten eines Jobs (16) für das Schneiden, Gravieren, Markieren und/oder Beschriften eines vorzugsweise flachen Werkstückes (3), der zumindest ein Gehäuse (4) mit einem Bearbeitungsraum (8) zum Positionieren eines Werkstückes (3) aufweist, wobei dieser zumindest eine Strahlenquelle in Form eines Lasers (9) und eine Steuereinheit (10) zum Steuern des über vorzugsweise einen Riemenantrieb betriebenen Schlitten (11) mit daran verfahrbar angeordneten Fokussiereinheit (12) aufweist, wobei zwischen dem Schlitten (11) und einer Bearbeitungsoberfläche (6) des Bearbeitungsraums (8) ein Absaugbalken (20) zum Absaugen der bei der Bearbeitung des Werkstückes (3) durch einen Laserstrahl (18) entstehende Abgase bzw. Dämpfe (19) angeordnet ist, wobei mehrere Absaugöffnungen (21) des Absaugbalkens (20) zum Erzeugen eines horizontalen Absaugstromes (22) parallel zur Bearbeitungsoberfläche (6) angeordnet bzw. ausgerichtet sind, **dadurch gekennzeichnet, dass** der Absaugbalken (20) am Schlitten (11) befestigt und L-förmig ausgebildet ist und die Absaugöffnungen (21) elektronisch steuerbar sind und in mehrere Segmente (24 bis 26) unterteilt sind, wobei die Segmente (24 bis 26) nicht nur in Abhängigkeit von der Position der Fokussiereinheit (12) aktivierbar sind, sondern dass die nicht in der Nähe befindlichen Segmente (24 bis 26) deaktivierbar sind.

2. Flachbett-Laserplotter (1) nach Anspruch 1, **dadurch gekennzeichnet, dass** die Absaugöffnungen (22) durch mehrere Bohrungen oder einen oder mehrere Kanäle, insbesondere Längskanäle, oder elektronisch steuerbare Ventile, gebildet sind, die zum Erzeugen des parallel zur Bearbeitungstisch ausgerichteten Absaugstrom positioniert sind.

3. Fiachbett-Laserpiotter (1) nach einem der vorhergehenden Ansprüche, **dadurch gekennzeichnet, dass** an der Fokussiereinheit (12) bzw. am Laserkopf (12) zur Steuerung der Absaugströmung (22) eine Absaugkappe (29) angeordnet ist.

4. Verfahren zum Betreiben eines Flachbett-Laserplotters zum Bearbeiten vorzugsweiser flacher Werkstücke für einen abzuarbeitenden Job für das Schneiden, Gravieren, Markieren und/oder Beschriften eines Werkstückes (3) bzw. Rohlings (3), bei dem in einem Gehäuse (4) des Flachbett-Laserplotters (1) zumindest eine Strahlenquelle in Form eines Lasern (9) eingesetzt ist, der auf das zu bearbeitendes Werkstück (3) einwirkt, wobei das Werkstück (3) in einem Bearbeitungsraum (8) definiert abgelegt wird und ein von der Strahlquelle abgegebener Laserstrahl (18) über Umlenkelemente an eine Fokussiereinheit (12) bzw. Laserkopf (12) gesendet wird, von der der Laserstrahl (18) in Richtung Werkstück (3) abgelenkt und zur Bearbeitung fokussiert wird, wobei über eine Steuereinheit (10) die Positionssteuerung zum Werkstück (3) über eine in der Steuereinheit (10) laufende Software erfolgt, sodass das Werkstück (3) bevorzugt zeilenweise durch Verstellung eines Schlittens (11) über vorzugsweise einem Riemenantrieb in X-Y-Richtung bearbeitet wird, und dass vorzugsweise an einer externen Komponente (15), insbesondere einem Computer (15a) oder einem Steuergerät, eine Grafik und/oder ein Text über eine handelsübliche Software erstellt wird, welche an die Steuereinheit (10) des Laserplotters (1) übergeben wird und von der Steuereinheit (10) in Form eines oder mehrerer Jobs (16) abgearbeitet wird, **dadurch gekennzeichnet, dass** ein horizontaler Absaugstrom (22) von einem am Schlitten (11) befestigten und L-förmig ausgebildeten und mehrere elektronisch steuerbare Absaugöffnungen aufweisenden Absaugbalken (20) zwischen dem Schlitten (11), insbesondere der Fokussiereinheit (12) bzw. Laserkopf und einem Bearbeitungstisch (7) erzeugt wird, wobei die Absaugöffnungen (21) in mehrere Segmente (24 bis 26) aufgeteilt sind, wobei die Segmente (24 bis 26) nicht nur in Abhängigkeit von der Position der Fokussiereinheit (12) aktiviert werden, sondern dass die nicht in der Nähe befindlichen Segmente (24 bis 26) deaktiviert werden.

5. Verfahren nach Anspruch 4, **dadurch gekennzeichnet, dass** zur Steuerung einer Absaugströmung (22) eine Absaugkappe (29) am Laserkopf (12) bzw. der Fokussiereinheit (12) befestigt wird.

## Claims

1. Flatbed laser plotter (1) for processing a job (16) for cutting, engraving, marking and/or lettering a preferably flat workpiece (3), which plotter has at least one housing (4) with a processing chamber (8) for positioning a workpiece (3), wherein said housing has at least one irradiation source in the form of a laser (9) and a control unit (10) for controlling the carriage (11), which is operated by means of preferably a belt drive, with a focusing unit (12) arranged thereon so as to be movable, wherein between the carriage (11) and a processing surface (6) of the processing chamber (8) an extraction bar (20) is arranged for extracting the exhaust gases or vapors (19), respectively, which are produced by a laser beam (18) during the processing of the workpiece (3), wherein a plurality of extraction openings (21) of the extraction bar (20) are arranged or aligned, respectively, parallel to the processing surface (6) for generating a horizontal extraction flow (22), **characterized in that** the extraction bar (20) is attached to the carriage (11) and is formed L-shaped, and the extraction openings (21) are electronically controllable and are divided into a plurality of segments (24 to 26), wherein the segments (24 to 26) are not only activatable in dependence on the position of the focusing unit (12), but the segments (24 to 26) not located in the vicinity are deactivatable.

2. Flatbed laser plotter (1) according to claim 1, **characterized in that** the extraction openings (22) are formed by a plurality of bores or one or several channels, in particular longitudinal channels, or electronically controllable valves, which are positioned for generating the extraction flow aligned parallel to the processing table.

3. Flatbed laser plotter (1) according to any one of the preceding claims, **characterized in that** an extraction cap (29) is arranged on the focusing unit (12) or on the laser head (12), respectively, for controlling the extraction flow (22).

4. Method for operating a flat-bed laser plotter for processing preferably flat workpieces for a job to be processed for cutting, engraving, marking and/or lettering a workpiece (3) or blank (3), respectively, in which at least one irradiation source in the form of a laser (9) is inserted in a housing (4) of the flat-bed laser plotter (1) and acts on the workpiece (3) to be processed, wherein the workpiece (3) is deposited in a defined manner in a processing chamber (8) and a laser beam (18) emitted by the beam source sent via deflecting elements to a focusing unit (12) or laser head (12), respectively, by which the laser beam (18) is deflected in the direction of the workpiece (3) and focused for machining, wherein the position control with respect to the workpiece (3) is effected via a control unit (10) by means of software running in the control unit (10), so that the workpiece (3) is preferably machined line by line by adjustment of a carriage (11) via preferably a belt drive in the X-Y direction, and that preferably on an external component (15), in particular a computer (15a) or a control device, a graphic and/or a text is produced by means of commercially available software, which graphic and/or text is transferred to the control unit (10) of the laser plotter (1) and is processed by the control unit (10) in the form of one or several jobs (16), **characterized in that** a horizontal extraction flow (22) is generated by an extraction bar (20), which is attached to the carriage (11), is formed L-shaped and has a plurality of electronically controllable extraction openings, between the carriage (11), in particular the focusing unit (12) or laser head, respectively, and a processing table (7), wherein the extraction openings (21) are divided into several segments (24 to 26), wherein the segments (24 to 26) are not only activated in dependence on the position of the focusing unit (12), but the segments (24 to 26) which are not located in the vicinity are deactivated.

5. Method according to claim 4, **characterized in that** an extraction cap (29) is attached to the laser head (12) or the focusing unit (12), respectively, for controlling an extraction flow (22).

## Revendications

1. Traceur laser à lit plat (1) pour exécuter une tâche (16) de découpe, de gravure de marquage et/ou d'inscription d'une pièce à usiner (3) de préférence plane, qui présente au moins un boîtier (4) avec un espace de traitement (8) pour le positionnement d'une pièce à usiner (3), présentant au moins une source de rayonnement sous forme d'un laser (9) et une unité de commande (10) pour la commande d'un chariot (11) actionné de préférence par un entraînement par courroie avec une unité de mise au point (12) mobile placée sur celui-ci, une barre d'aspiration (20) étant disposée entre le chariot (11) et une surface de traitement (6) de l'espace de travail (8) pour l'aspiration des gaz ou des vapeurs (19) émanant d'un faisceau laser (18) lors du traitement de la pièce à usiner (3), plusieurs orifices d'aspiration (21) de la barre d'aspiration (20) étant placés ou orientés de manière parallèle à la surface de traitement (6) pour la production d'un flux d'aspiration horizontal (22), **caractérisé en ce que** la barre d'aspiration (20) est fixée au chariot (11) et est conçue en forme de L et les orifices d'aspiration (21) peuvent être commandés électroniquement et sont divisés en plusieurs segments (24 à 26), les segments (24 à 26) pouvant non seulement être activés en fonction de la position de l'unité de mise au point (12), mais les segments (24 à 26) qui ne sont pas à proximité pouvant également être désactivés.

2. Traceur laser à lit plat (1) selon la revendication 1, **caractérisé en ce que** les orifices d'aspiration (22) sont formés par plusieurs orifices ou un ou plusieurs canaux, notamment des canaux longitudinaux, ou des valves à commande électronique, qui sont positionnés de manière parallèle au plateau de travail pour la production du flux d'aspiration.

3. Traceur laser à lit plat (1) selon l'une des revendications précédentes, **caractérisé en ce qu'**un capuchon d'aspiration (29) est disposé sur l'unité de mise au point (12) ou la tête du laser (12) pour la commande du flux d'aspiration (22).

4. Procédé pour l'exploitation d'un traceur laser à lit plat pour le traitement de pièces à usiner de préférence planes pour une tâche de découpe, de gravure de marquage et/ou d'inscription d'une pièce à usiner (3) ou d'ébauches (3) à exécuter, dans lequel au moins une source laser est insérée dans un boîtier (4) du traceur laser à lit plat (1) sous la forme d'un laser (9), qui agit sur la pièce à usiner (3), la pièce à usiner (3) étant déposée de manière définie dans un espace de traitement (8) et un faisceau laser (18) émis par la source de rayonnement étant envoyé à une unité de mise au point (12) ou une tête laser (12) par le biais d'éléments déflecteurs, d'où le faisceau laser (18) est dévié sur la pièce à usiner (3) et est mis au point pour le traitement, la commande de positionnement par rapport à la pièce à usiner (3) étant effectuée par le biais d'une unité de commande (10) au moyen d'un logiciel fonctionnant dans l'unité de commande (10), de sorte que la pièce à usiner (3) est traitée de préférence par lignes par le réglage d'un chariot (11) de préférence par le biais d'un entraînement par courroie en direction X-Y, et qu'un graphique et/ou un texte est créé par le biais d'un logiciel courant, de préférence sur des composants externes (15), notamment un ordinateur (15a) ou un appareil de commande, qui est transmis à l'unité de commande (10) du traceur laser (1) et traité par l'unité de commande (10) sous forme d'une ou plusieurs tâches (16), **caractérisé en ce qu'**un flux d'aspiration horizontal (22) est généré par une barre d'aspiration (20) fixée au chariot (11) présentant plusieurs orifices d'aspiration pouvant être commandés électroniquement et en forme de L entre le chariot (11), notamment l'unité de commande (12) ou la tête laser et un plateau de travail (7), les orifices d'aspiration (21) étant divisés en plusieurs segments (24 à 26), les segments (24 à 26) étant activés non seulement en fonction de la position de l'unité de mise au point (12), mais les segments (24 à 26) qui ne se trouvent pas à proximité étant désactivés.

5. Procédé selon la revendication 4, **caractérisé en ce qu'**un capuchon d'aspiration peut être fixé (29) au niveau de la tête laser (12) ou de l'unité de mise au point (12) pour la commande d'un flux d'aspiration (22).
